# EUROPEAN PATENT SPECIFICATION

(11) **EP 3 832 557 B1**
(45) Date of publication and mention of the grant of the patent: **27.12.2023**
(21) Application number: 20208622.9
(22) Date of filing: 19.11.2020
(51) Int. Cl.: G06N 20/00

(54) **DETERMINATION APPARATUS, DETERMINATION METHOD, DETERMINATION PROGRAM, AND RELATED SYSTEM, METHOD, PROGRAM AND COMPUTER READABLE RECORDING MEDIUM**
BESTIMMUNGSVORRICHTUNG, BESTIMMUNGSVERFAHREN, BESTIMMUNGSPROGRAMM, UND ZUGEHÖRIGES SYSTEM, VERFAHREN, PROGRAMM UND COMPUTER-LESBARES MEDIUM
APPAREIL DE DÉTERMINATION, PROCÉDÉ DE DÉTERMINATION, PROGRAMME DE DÉTERMINATION, ET SYSTÈME, MÉTHODE, PROGRAMME ET SUPPORT D'ENREGISTREMENT LISIBLE PAR ORDINATEUR CORRESPONDANTS

(30) Priority: 06.12.2019 JP 2019221233
(43) Date of publication of application: 09.06.2021
(73) Proprietor: YOKOGAWA ELECTRIC CORPORATION, Musashino-shi Tokyo 180-8750 (JP)
(72) Inventor: FUJII, Hideyuki, Musashino-shi, Tokyo 180-8750 (JP)
(74) Representative: Grünecker Patent- und Rechtsanwälte PartG mbB

(56) References cited:
- CN-A- 110 187 727
- JP-A- 2019 143 388
- US-A1- 2003 097 230
- US-A1- 2019 286 725
- US-B1- 6 879 971
- KOVALEV DMITRY ET AL: "Data Mining Methods and Techniques for Fault Detection and Predictive Maintenance in Housing and Utility Infrastructure", 2018 INTERNATIONAL CONFERENCE ON ENGINEERING TECHNOLOGIES AND COMPUTER SCIENCE (ENT), IEEE, 20 March 2018 (2018-03-20), pages 47-52, XP033377798, DOI: 10.1109/ENT.2018.00016 [retrieved on 2018-07-25]

## Description

### 1. TECHNICAL FIELD

The present invention relates to a determination apparatus, a determination method, a determination program. It further relates to a system comprising the determination apparatus, a method comprising the determination method, a program for carrying out the method and a computer readable medium for storing the programs.

### 2. RELATED ART

Conventionally, the technology for acquiring data from devices provided on measurement targets such as factories or equipment, and determining the states of the measurement targets using a learning model is known.

### [Prior Art Document]

### [Patent Document]

Patent Document 1: Japanese Patent Application Publication No. 2019-101495.

US 6,879,971 B1 discloses an automated method for building a model, wherein the method for determining an output value has a known relationship to an input value with a predicted value and includes the step of first training a predictive model with at least one output for a given set of inputs that exist in a finite dataset.

In determining the state of a measurement target, the data obtained by measuring the measurement target may be preprocessed. In this case, applying a preprocessing algorithm according to the learning model used for determining the state of the measurement target is preferred.

### GENERAL DISCLOSURE

The invention is defined by the appended claims.

To solve the above problems, a first aspect of the present invention provides a determination apparatus according to claim 1.

The determination data preprocessing unit may execute the interpolation processing on the determination data.

The interpolation processing may be a previous value interpolation processing.

The interpolation processing may be a linear interpolation processing.

The determination data preprocessing unit may execute waveform compression processing on the determination data.

The determination apparatus may further include a learning data acquisition unit for acquiring learning data, which are the time series data obtained by measuring the measurement target; and a preprocessing determination unit for determining preprocessing algorithm to preprocess the learning data; and a learning data preprocessing unit for preprocessing the learning data by the preprocessing algorithm; and a learning unit for learning the learning model using the preprocessed learning data; a preprocessing information output unit for outputting, in association with the learning model, the information for specifying the preprocessing algorithm.

The determination apparatus may further include a learning model.

A second aspect of the present invention provides a determination method according to claim 8.

A third aspect of the present invention provides a determination program according to claim 9. The determination program may be executed by a computer.

A fourth aspect of the present invention provides a system according to claim 10, comprising the determination apparatus and a learning apparatus.

A fifth aspect of the present invention provides a method according to claim 11, comprising the determination method and a learning method.

A sixth aspect of the present invention provides a program according to claim 12. The learning program may be executed by a computer.

A seventh aspect of the present invention provides a computer readable recording medium according to 13.

### BRIEF DESCRIPTION OF THE DRAWINGS

Fig. 1 illustrates one example of a block diagram of the determination apparatus 100 of the present embodiment.
Fig. 2 illustrates one example of a flow for determining the state of the measurement target by the determination apparatus 100 of the present embodiment.
Fig. 3 illustrates one example of a block diagram of a learning apparatus 300 of the present embodiment.
Fig. 4 illustrates one example of a flow for learning a learning model 350 by the learning apparatus 300 of the present embodiment.
Fig. 5 illustrates one example of time series data before and after a previous value interpolation processing.
Fig. 6 illustrates one example of time series data before and after a linear interpolation processing.
Fig. 7 illustrates one example of time series data before and after a waveform compression processing.
Fig. 8 illustrates one example of a block diagram of the determination apparatus 100 in a variant of the present embodiment.
Fig. 9 illustrates one example of time series data when the period for which data cannot be obtained exceeds the predetermined period.

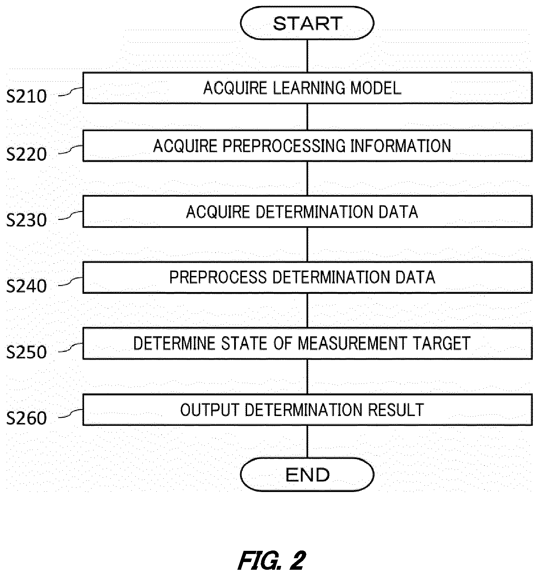

Fig. 2 illustrates one example of a flow for determining the state of the measurement target by the determination apparatus 100 not falling under the invention.

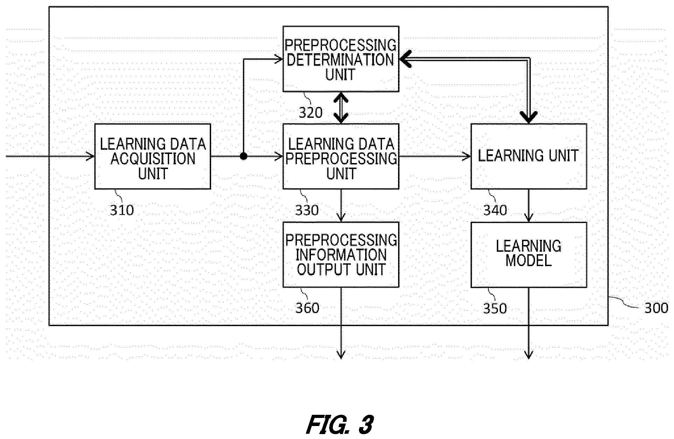

Fig. 3 illustrates one example of a block diagram of a learning apparatus 300 of the present embodiment.

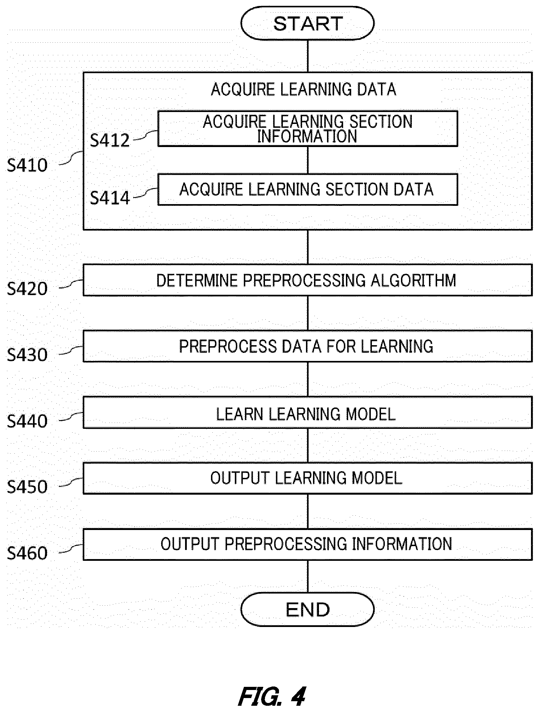

Fig. 4 illustrates one example of a flow for learning a learning model 350 by the learning apparatus 300 of the present embodiment.

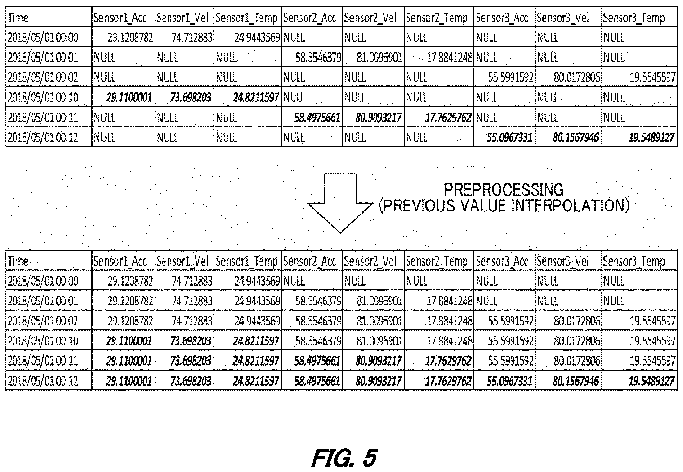

Fig. 5 illustrates one example of time series data before and after a previous value interpolation processing.

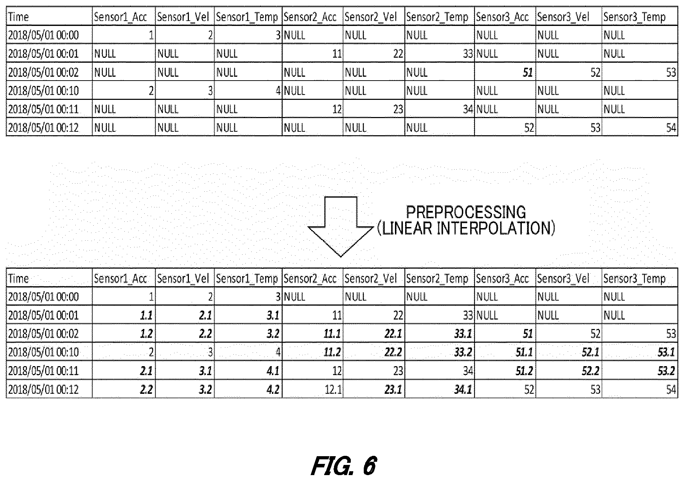

Fig. 6 illustrates one example of time series data before and after a linear interpolation processing.

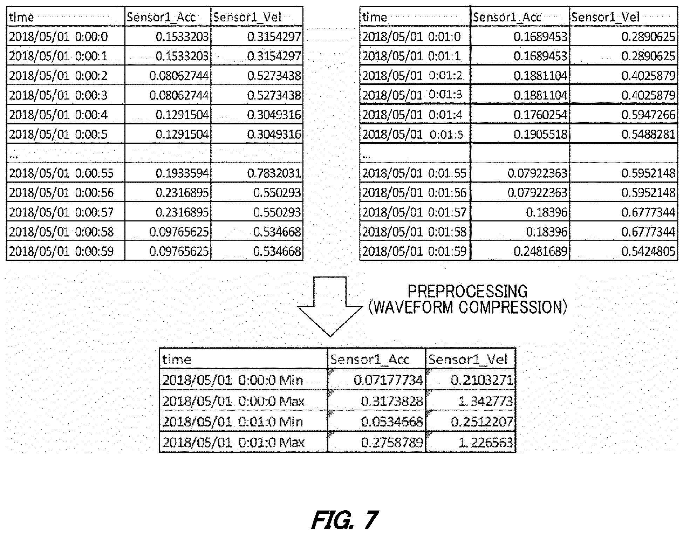

Fig. 7 illustrates one example of time series data before and after a waveform compression processing.

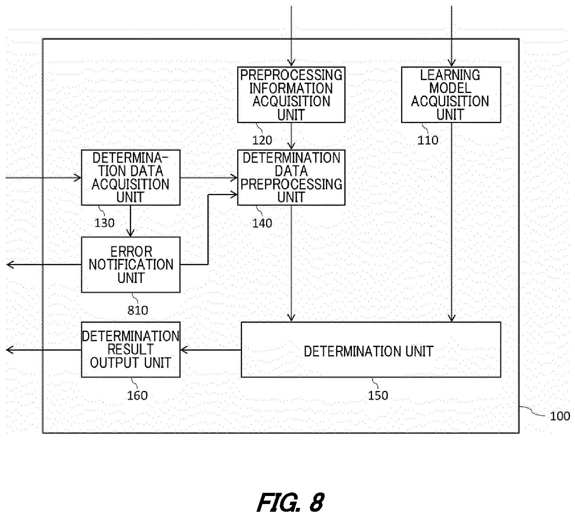

Fig. 8 illustrates one example of a block diagram of the determination apparatus 100 in a variant of the present embodiment.

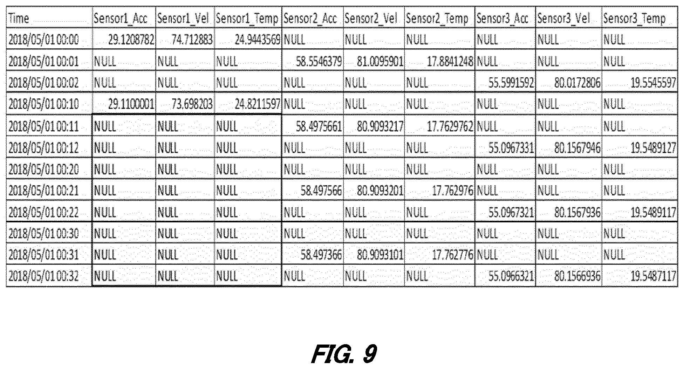

Fig. 9 illustrates one example of time series data when the period for which data cannot be obtained exceeds the predetermined period.

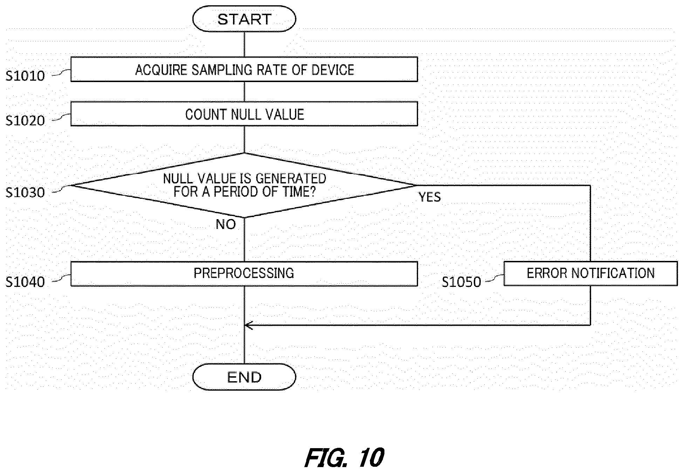

Fig. 10 illustrates one example of a flow for notifying the error by the determination apparatus 100 in a variant of the present embodiment.

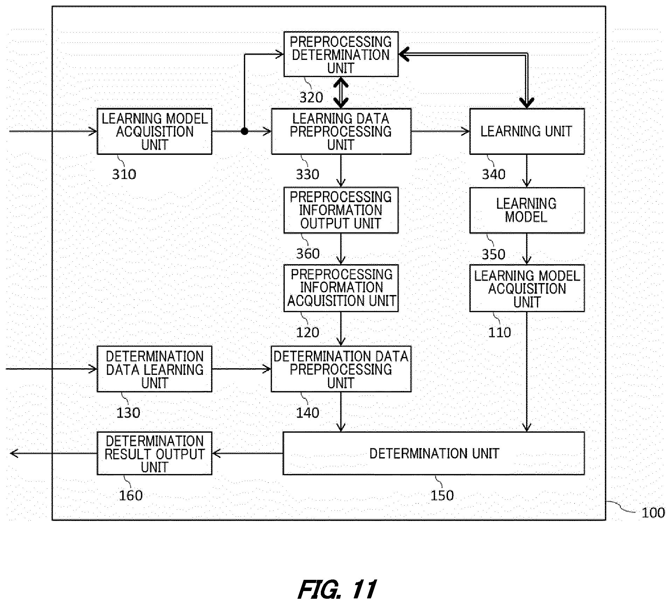

Fig. 11 illustrates one example of a block diagram of the determination apparatus 100 not falling under the invention.

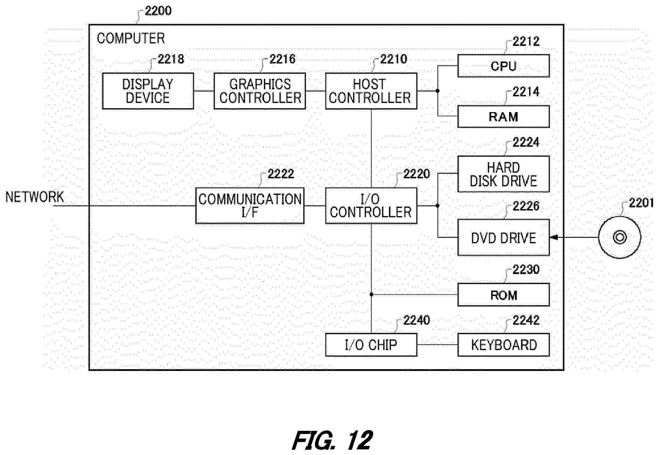

Fig. 12 illustrates an example of a computer 2200 in which a plurality of aspects of the present invention may be embodied entirely or partially.

### DESCRIPTION OF EXEMPLARY EMBODIMENTS

Hereinafter, the present invention will be described with reference to the figures. However, the following embodiments shall not be construed as limiting the claimed invention. Also, not all combinations of features described in the embodiments are essential for means to solve problems provided by aspects of the invention.

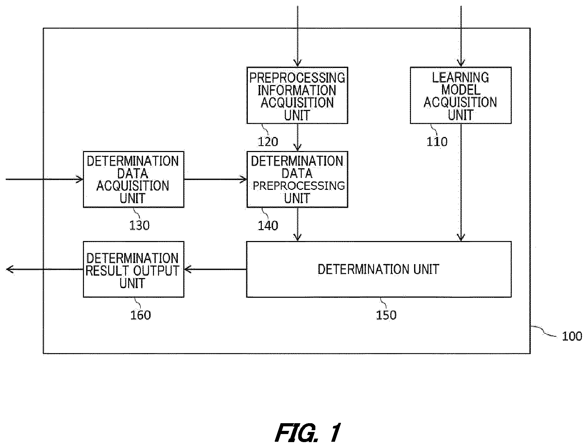

Fig. 1 illustrates one example of a block diagram of the determination apparatus 100 not falling under the invention. The determination apparatus 100 determines, using the learning model, the state of the measurement target based on the determination data, which are the time series data obtained by measuring a measurement target. On this occasion, the determination apparatus 100 preprocesses the determination data by the preprocessing algorithm used for learning the learning model.

The determination apparatus 100 determines plant deterioration and abnormalities based on the determination data acquired in a time series from field devices installed in the plant.

Such plants may be, for example, besides industrial plants such as chemical plants, plants for controlling and managing wellheads and surroundings of gas or oil fields, plants for controlling and managing power generation such as hydro, thermal, nuclear power generation, plants for controlling and managing environmental power generation such as solar and wind power generation, and plants for controlling and managing water supply and sewerage or dams, and so on.

Also, the field devices installed in such plants may be, for example, sensor devices such as pressure gauges, flow meters or temperature sensors, valve devices such as flow control valves or switch valves, actuator devices such as fans or motors, imaging devices such as cameras or video-cameras that capture conditions and objects in the plant, acoustic devices such as microphones or speakers that collect unusual sounds or the like in the plant or emit alarm sounds or the like, and location detector devices that output location information for each device.

The determination apparatus 100 may be a computer, such as a PC (personal computer), a tablet computer, a smart phone, a work station, a server computer, or a general purpose computer, and may also be a computer system with a plurality of computers connected thereto. Such a computer system is also a computer in a broad sense. Also, the determination apparatus 100 may also be implemented by one or more executable virtual computer environments in the computer. Instead of that, the determination apparatus 100 may also be a dedicated computer designed for the state determination of the measurement target, or may be a dedicated hardware realized by dedicated circuits. Also, when the determination apparatus 100 can be connected to internet, the determination apparatus 100 may also be realized by cloud computing.

The determination apparatus 100 includes a learning model acquisition unit 110, a preprocessing information acquisition unit 120, a determination data acquisition unit 130, a determination data preprocessing unit 140, a determination unit 150 and a determination result output unit 160. These blocks are each a functionally separated functional block, and may not necessarily correspond to the actual device configuration. That is, in this diagram, even though itis shown as a single block, it may not necessarily configured by a single device. Also, in this diagram, even though they are shown as separate blocks, they may not necessarily configured by separate devices.

The learning model acquisition unit 110 inputs the determination data, which are the time series data obtained by measuring a measurement target, and acquires the learning model that outputs the state of the measurement target. For example, the learning model acquisition unit 110 acquires, via network, the learning model learned by using the learning data, the learning data being the time series data obtained by measuring a measurement target by the learning apparatus by the learning apparatus. The learning model acquisition unit 110 supplies the acquired learning model to the determination unit 150.

The preprocessing information acquisition unit 120 acquires the information that specifies the preprocessing algorithm used for learning the learning model acquired by the learning model acquisition unit 110. For example, the preprocessing information acquisition unit 120 acquires via network, from learning apparatus, the information that specifies the preprocessing algorithm executed on the learning data, when the learning apparatus is learning the learning model. The preprocessing information acquisition unit 120 supplies the information that specifies the acquired preprocessing algorithm, to the determination data preprocessing unit 140.

The determination data acquisition unit 130 acquires the determination data, which are the time series data obtained by measuring a measurement target. For example, the determination data acquisition unit data 130 acquires, via network, the determination data from measurement data DB (Database) that stores the time series data measured by a plurality of field devices installed in the plant. The determination data acquisition unit 130 supplies the acquired determination data to the determination data preprocessing unit 140.

The determination data preprocessing unit 140 preprocesses the determination data by the preprocessing algorithm used for learning the learning model that outputs the state of the measurement target. For example, the determination data preprocessing unit 140 specifies the preprocessing algorithm used for learning the learning model that outputs the state of the measurement target, based on the information that specifies the preprocessing algorithm supplied by the preprocessing information acquisition unit 120. Then, the determination data preprocessing unit 140 preprocesses the determination data supplied by the determination data acquisition unit 130, by the specified preprocessing algorithm. The determination data preprocessing unit 140 supplies the preprocessed determination data to the determination unit 150.

The determination unit 150 determines, using the learning model, the state of the measurement target based on the preprocessed determination data. For example, the determination unit 150 determines an abnormality of a measurement target or the like according to the output of the learning model in the case of inputting, to the learning model supplied by the learning model acquisition unit 110, the preprocessed determination data supplied by the determination data preprocessing unit 140. The determination unit 150 supplies the determination result of the measurement target to the determination result output unit 160.

The determination result output unit 160 outputs the determination result of the measurement target. For example, the determination result output unit 160 transmits and outputs the determination result supplied by the determination unit 150, to the other apparatuses such as determination result DB.

Fig. 2 illustrates one example of a flow for determining the state of the measurement target by the determination apparatus 100.

In step 210, the determination apparatus 100 acquires the learning model. For example, the learning model acquisition unit 110 inputs the determination data, which are the time series data obtained by measuring a measurement target, and acquires the learning model that outputs the state of the measurement target. On this occasion, the learning model acquisition unit 110, along with the learning model, may acquire the identifying information for identifying the learning model. Then, the learning model acquisition unit 110 may supply the acquired identification information to the preprocessing information acquisition unit 120. Herein, the learning model acquired by the learning model acquisition unit 110 may be the model learned by various of algorithms, for example, regression analysis, cluster analysis, principal component analysis, vector quantization, self-organization map, neural network, support vector machine, ID3, and simple Bayesian classifier and so on. As one example, the learning model acquisition unit 110 acquires the learning model learned by using the learning data, which are the time series data measured on a measurement target by the learning apparatus, from the learning apparatus via network. However, it is not limited to this. The learning model acquisition unit 110 may also acquire the learning model via the other means different from the network, such as user inputs or various memory devices. Also, the learning model acquisition unit 110 may also acquire the learning model from the other apparatuses different from the learning apparatus. The learning model acquisition unit 110 supplies the acquired learning model to the determination unit 150.

In step 220, the determination apparatus 100 acquires the preprocessing information. For example, the preprocessing information acquisition unit 120 identifies the learning model acquired by the learning model acquisition unit 110, based on the identification information supplied by the learning model acquisition unit 110. Then, the preprocessing information acquisition unit 120 acquires, as a retrieval key, the information that specifies the preprocessing algorithm used for learning the identified learning model, from a plurality of preprocessing information items that are stored in association with each of the plurality of the learning models. As one example, when the learning apparatus is learning the learning model, the preprocessing information acquisition unit 120 acquires the information that specifies the preprocessing algorithm executed on learning data, from the learning apparatus via network. However, it is not limited to this. The preprocessing information acquisition unit 120 may also acquire the information that specifies the preprocessing algorithm via the other means different from the network, such as user inputs or various memory devices. Also, the preprocessing information acquisition unit 120 may also acquire the information that specifies the preprocessing algorithm from the other apparatuses different from the learning apparatus. The preprocessing information acquisition unit 120 supplies the information that specifies the acquired preprocessing algorithm to the determination data preprocessing unit 140.

In step 230, the determination apparatus 100 acquires the determination data. For example, the determination data acquisition unit 130 acquires the determination data, which are the time series data obtained by measuring a measurement target. As one example, the determination data acquisition unit 130 acquires, via network, the determination data, from measurement data DB that stores the time series data measured by a plurality of field devices installed in the plant. However, it is not limited to this. The determination data acquisition unit 130 may also acquire the determination data via the other means different from the network, such as user inputs or various memory devices. Also, the determination data acquisition unit 130 may also acquire the determination data from the other apparatuses different from measurement data DB. The determination data acquisition unit 130 supplies the acquired determination data to the determination data preprocessing unit 140.

In step 240, the determination apparatus 100 preprocesses the determination data. For example, the determination data preprocessing unit 140 preprocesses the determination data, by the preprocessing algorithm used for learning the learning model that outputs the state of the measurement target. As one example, the determination data preprocessing unit 140 specifies the preprocessing algorithm used for learning the learning model that outputs the state of the measurement target, based on the information that specifies the preprocessing algorithm supplied by the preprocessing information acquisition unit 120. Then, the determination data preprocessing unit 140 preprocesses the determination data supplied by the determination data acquisition unit 130, by the specified preprocessing algorithm. Herein, the determination data preprocessing unit 140 specifies the processing to be used among a plurality of processings, for example, interpolation (previous value, average value, median value, mode value and linear and so on), waveform compression, moving average, standardization, and normalization and so on as the preprocessing algorithm, and also specifies various parameters applied in the specified preprocessing, then preprocesses the determination data by the specified preprocessing algorithm. The details of the preprocessing are described below. The determination data preprocessing unit 140 supplies the preprocessed determination data to the determination unit 150.

In step 250, the determination apparatus 100 determines the state of the measurement target. For example, the determination unit 150 determines the state of the measurement target based on the preprocessed determination data using the learning model. As one example, the determination unit 150 determines an abnormality of a measurement target or the like, according to the output of the learning model in the case of inputting, to the learning model supplied by the learning model acquisition unit 110, the preprocessed determination data supplied by determination data preprocessing unit 140. That is, the determination unit 150 inputs the determination data preprocessed by the preprocessing algorithm used for learning the learning model into the learning model, then determines the state of the measurement target. The determination unit 150 supplies the determination result of the measurement target to the determination result output unit 160.

In step 260, the determination apparatus 100 outputs the determination result, and ends the processing. For example, the determination result output unit 160 transmits and outputs the determination result supplied by the determination unit 150 (result indicating abnormality or degradation or the like of the measurement target), to the other apparatuses such as determination result DB. However, it is not limited to this. The determination result output unit 160 may also output the determination result supplied by the determination unit 150, by displaying on a monitor or the like, by sound from a speaker or the like, by writing out into various memory devices or the like.

Generally, in the case of distance-based learning model, such as support vector machine or logistic regression and the gradient descent method, the accuracy of determination can be improved by preprocessing, such as standardization and normalization, to match the range (scale) of each time series data. Also, when noise or invalid values are included due to the characteristics of each sensor and so on, the accuracy of determination will be improved by performing a moving average and appropriate data interpolation in preprocessing. Accordingly, the determination apparatus 100 applies the preprocessing algorithm to the determination data according to the learning model, and determines the state of the measurement target. Additionally, such a preprocessing algorithm may be determined along with the machine learning, in which the learning apparatus described below learns the learning model.

Fig. 3 illustrates one example of a block diagram of the learning apparatus 300 of the present embodiment. The learning apparatus 300 learns the learning model that outputs the state of the measurement target, by using the learning data, which are the time series data obtained by measuring a measurement target. On this occasion, the learning apparatus 300 of the present embodiment determines the preprocessing algorithm according to the learning model, preprocesses the learning data by the preprocessing algorithm, and at the same time outputs the information that specifies the preprocessing algorithm in association with the learning model.

The learning apparatus 300 may be a computer, such as a PC (personal computer), a tablet computer, a smart phone, a work station, a server computer, or a general purpose computer, or may also be a computer system with a plurality of computers connected thereto. Such a computer system is also a computer in a broad sense. Also, the learning apparatus 300 may also be implemented by one or more executable virtual computer environments in the computer. Instead of that, the learning apparatus 300 may also be a dedicated computer designed for learning the learning model, or may be a dedicated hardware realized by dedicated circuits. Also, when the learning apparatus 300 can be connected to internet, the learning apparatus 300 may also be realized by cloud computing.

The learning apparatus 300 includes a learning data acquisition unit 310, a preprocessing determination unit 320, a learning data preprocessing unit 330, a learning unit 340, a learning model 350 and a preprocessing information output unit 360. Additionally, each of these blocks is a functionally separate functional block, and may not necessarily match the configuration of actual devices or apparatuses. That is, in this diagram, even though it is shown as a single block, it may not necessarily configured by a single device. Also, in this diagram, even though they are shown as separate blocks, they may not necessarily configured by separate devices.

The learning data acquisition unit 310 acquires the learning data, which are the time series data obtained by measuring a measurement target. For example, the learning data acquisition unit 310 acquires, via network, the learning data, from measurement data DB that stores the time series data measured by a plurality of field devices installed in the plant. The learning data acquisition unit 310 supplies the acquired learning data to the preprocessing determination unit 320 and the learning data preprocessing unit 330.

The preprocessing determination unit 320 determines the preprocessing algorithm for preprocessing the learning data. For example, the preprocessing determination unit 320 determines the preprocessing algorithm for preprocessing the learning data, cooperating with the learning data preprocessing unit 330 and the learning unit 340, by using the learning data supplied by the learning data acquisition unit 310. The details of the determination of the preprocessing algorithm are described below. The preprocessing determination unit 320 supplies the information about the determined preprocessing algorithm to the learning data preprocessing unit 330.

The learning data preprocessing unit 330 preprocesses the learning data by the preprocessing algorithm. For example, the learning data preprocessing unit 330 preprocesses the learning data supplied by the learning data acquisition unit 310, by the preprocessing algorithm determined by the preprocessing determination unit 320. The learning data preprocessing unit 330 supplies the preprocessed learning data to the learning unit 340. Also, the learning data preprocessing unit 330 supplies the information that specifies the preprocessing algorithm used during the preprocessing of the learning data, to the preprocessing information output unit 360.

The learning unit 340 learns the learning model 350 that outputs the state of the measurement target by using the preprocessed learning data. For example, the learning unit 340 learns the learning model 350 using the learning data preprocessed by the learning data preprocessing unit 330.

The learning model 350 inputs the determination data, which are the time series data obtained by measuring a measurement target, and then outputs the state of the measurement target. For example, the learning model 350 may be the model learned by the learning unit 340, using the learning data preprocessed by the learning data preprocessing unit 330. The learning model 350 may be supplied to the other apparatuses such as the determination apparatus 100.

The preprocessing information output unit 360 outputs the information that specifies the preprocessing algorithm corresponding to the learning model 350. For example, the preprocessing information output unit 360 may output the information that specifies the preprocessing algorithm supplied by the learning data preprocessing unit 330, to the other apparatuses such as the determination apparatus 100, in association with the learning model 350.

Fig. 4 illustrates one example of a flow of learning the learning model 350 by the learning apparatus 300 of the present embodiment.

In step 410, the learning apparatus 300 acquires the learning data. For example, the learning data acquisition unit 310 acquires the learning data, which are the time series data obtained by measuring a measurement target. On this occasion, in step 412, the learning data acquisition unit 310 acquires, via network, the information that specifies the learning section, from learning section information management DB that stores the information for managing the learning section. Then, in step 414, the learning data acquisition unit 310 acquires, via network, the time series data measured by devices in the learning section, from measurement data DB.

As one example, the learning data acquisition unit 310 may acquire the information that specifies the section with "normal" label on the state of the measurement target, as the information that specifies the learning section. Additionally, such a learning section may also be a temporally continuous section or a temporally discrete section. Also, such a section may be a section selected by person or automatically as a section with rare occurrence frequency of NULLs (data losses). Then, the learning data acquisition unit 310 may acquire the time series data measured by the plurality of field devices in the section with "normal" label on the state of the measurement target, as the learning data.

However, it is not limited to this. The learning data acquisition unit 310 may also acquire the learning data via the other means different from the network, such as user inputs or various memory devices. Also, the learning data acquisition unit 310 may also acquire the information that specifies the learning section, from the other apparatuses different from learning section information management DB. Also, the learning data acquisition unit 310 may also acquire the learning data, from the other apparatuses different from measurement data DB.

Also, in the above-mentioned description, the case where the learning data acquisition unit 310 acquires the time series data in the section with "normal" label on the state of the measurement target as the learning data is shown, and after that, the case where the learning apparatus 300 learns the learning model 350 based on the time series data in the "normal" section is described. However, it is not limited to this. For example, the learning data acquisition unit 310 acquires the time series data in the section with "abnormal" label on the state of the measurement target as the learning data, and the learning apparatus 300 may also learn the learning model 350 based on the time series data in the "abnormal" section. Also, the learning data acquisition unit 310 acquires the time series data without any label as the learning data, and the learning apparatus 300 identifies automatically the "normal" section or "abnormal" sections based on the distribution in the time series data, and may also learn the learning model 350 based on the time series data identified as the "normal" section or "abnormal" section.

The learning data acquisition unit 310 supplies the acquired learning data to the preprocessing determination unit 320 and the learning data preprocessing unit 330.

In step 420, the learning apparatus 300 determines the preprocessing algorithm. For example, the preprocessing determination unit 320 determines the preprocessing algorithm for preprocessing the learning data. On this occasion, the preprocessing determination unit 320 may determine the preprocessing algorithm for preprocessing the learning data by cooperating with the learning data preprocessing unit 330 and the learning unit 340, using the learning data supplied by the learning data acquisition unit 310.

As one example, the preprocessing determination unit 320 cooperates with the learning data preprocessing unit 330 and the learning unit 340, and respectively applies, to the learning data, for example, a processing used among a plurality of processings such as interpolation (previous value, average value, median value, mode value and linear), waveform compression, moving average, standardization, and normalization and so on, and the plurality of preprocessing algorithms with at least one difference among the various parameter applied in the processings. Then, the preprocessing determination unit 320 cooperates with the learning data preprocessing unit 330 and the learning unit 340, based on the plurality of learning data preprocessed by the plurality of preprocessing algorithms, learns each of the learning models 350, and generates a plurality of provisional learning models. Then, the preprocessing determination unit 320 inputs the provisional measurement data with a known label of "normal" or "abnormal" to each of the plurality of provisional models for learning, and provisionally determines the state of each measurement target. Then, the preprocessing determination unit 320 selects the provisional learning model with the best provisional determination result among the plurality of provisional learning models, and determines the preprocessing algorithm applied in generating the provisional learning model, as the preprocessing algorithm for preprocessing the learning data.

The preprocessing determination unit 320 supplies the information about the determined preprocessing algorithm to the learning data preprocessing unit 330.

In step 430, the learning apparatus 300 preprocesses the learning data. For example, the learning data preprocessing unit 330 preprocesses the learning data by the preprocessing algorithm. As one example, the learning data preprocessing unit 330 preprocesses the acquired learning data in step 410, by the preprocessing algorithm determined in step 420. The learning data preprocessing unit 330 supplies the preprocessed learning data to the learning unit 340. Also, the learning data preprocessing unit 330 supplies the information that specifies the preprocessing algorithm used during preprocessing the learning data, to the preprocessing information output unit 360.

In step 440, the learning apparatus 300 learns the learning model 350. For example, the learning unit 340 learns the learning model 350 that outputs the state of the measurement target, using the preprocessed learning data. As one example, the learning unit 340 learns the learning model 350, using the preprocessed learning data in step 430.

In step 450, the learning apparatus 300 outputs the learning model 350. For example, according to the requirements from the determination apparatus 100, the learning apparatus 300 outputs the learning model 350 learned in step 440, to the determination apparatus 100 via network. On this occasion, the learning apparatus 300 may output along with the information for identifying the output learning model 350, to the determination apparatus 100.

In step 460, the learning apparatus 300 outputs the preprocessing information, and then ends the processing. For example, the preprocessing information output unit 360 outputs the information that specifies the preprocessing algorithm corresponding to the learning model 350. As one example, according to the requirements from the determination apparatus 100, the preprocessing information output unit 360 may output the information that specifies the preprocessing algorithm supplied by the learning data preprocessing unit 330, to the determination apparatus 100 via network, in association with the learning model 350.

In this manner, the learning apparatus 300 of the present embodiment determines the optimal preprocessing algorithm for each learning model 350, and learns the learning model 350 based on the learning data preprocessed by the determined preprocessing algorithm. Also, the learning apparatus 300 outputs the information that specifies the preprocessing algorithm executed on the learning data during learning the learning model 350, to the other apparatuses such as the determination apparatus 100.

Fig. 5 illustrates one example of the time series data before and after previous value interpolation processing. In this diagram, the vertical axis illustrates the time series, and the horizontal axis illustrates the types of each time series data (in this diagram, vibrational data of sensor 1, acceleration data of sensor 1, temperature data of sensor 1, vibrational data of sensor 2, acceleration data of sensor 2, temperature data of sensor 2, vibrational data of sensor 3, acceleration data of sensor 3, temperature data of sensor 3). The upper part of this diagram illustrates the time series data of each sensor before the execution of preprocessing.

The sensor data from the sensors arranged in various places are transferred on cloud or network at different timings. Therefore, as shown in the upper part of this diagram, the time series data of each sensor show NULLs in places when viewed with the same timestamp. That is, there is a data loss. Generally, when performing the state determination of the measurement target by machine learning, all the data required for the determination must exist at the same time. Accordingly, when the time series data are not preprocessed in such a situation, the state determination processing of the measurement target is executed when all the data are available (in this diagram, date and time: 2018/05/01 00:02, and date and time: 2018/05/01 00:12).

On the other hand, in the present embodiment, in the learning apparatus 300, the preprocessing determination unit 320 decides to execute the previous value interpolation processing as a preprocessing algorithm to preprocess the learning data in which such data loss occurs. Correspondingly, the learning data preprocessing unit 330 executes the previous value interpolation processing on the learning data. Then, in the determination apparatus 100, in this case where the state determination of the measurement target is performed by the learning model 350, learned by using the learning data where the previous value interpolation processing was executed, the preprocessing information acquisition unit 120 will acquire the information that specifies the execution of the previous value interpolation processing as the preprocessing algorithm. Correspondingly, the determination data preprocessing unit 140 executes the previous value interpolation processing on the determination data.

The lower part of this diagram illustrates the time series data after the execution of the previous value interpolation processing as the preprocessing. As illustrated in the lower part of this diagram, in the time series data of each sensor, the places where data loss occurred are interpolated by the data just before the data loss occurred. In more details, the vibrational data (Sensor1_Acc) of sensor 1 at date and time: 2018/05/01 00:01 and 00:02 are interpolated by "29.120872" from "NULL", which are the vibrational data of sensor 1 at 2018/05/01 00:00. Similarly, the acceleration data (Sensor 3_Vel) of sensor 3 at date and time: 2018/05/01 00:10 and 00:11 are interpolated by "80.0172806" from "NULL", which are the acceleration data of sensor 3 at 2018/05/01 00:02. In this manner, the determination data preprocessing unit 140 may execute the interpolation processing on the determination data. On this occasion, the interpolation processing may be the previous value interpolation processing. Thereby, the determination apparatus 100 can execute the state determination processing of the measurement target in all timings after the date and time: 2018/05/01 00:02.

Fig. 6 illustrates one example of the time series data before and after the linear interpolation processing. In this diagram, the vertical axis illustrates the time series, and the horizontal axis illustrates the types of each time series data. The upper part of this diagram illustrates the time series data of each sensor before the execution of preprocessing.

As shown in the upper part of this diagram, the time series data of each sensor show NULLs in places when viewed with the same timestamp. That is, there is a data loss. When the time series data are not preprocessed in such a situation, the state determination processing of the measurement target is executed when all the data are available (in this diagram, date and time: 2018/05/01 00:02, and date and time: 2018/05/01 00:12).

On the other hand, in the present embodiment, in the learning apparatus 300, the preprocessing determination unit 320 determines to execute the linear interpolation processing as a preprocessing algorithm to preprocess the learning data in which such data loss occurs. Correspondingly, the learning data preprocessing unit 330 executes the linear interpolation processing on the learning data. Then, in the determination apparatus 100, in this case where the state determination of the measurement target is performed by the learning model 350, learned by using the learning data where the linear interpolation processing was executed, the preprocessing information acquisition unit 120 will acquire the information that specifies the execution of the linear interpolation processing as the preprocessing algorithm. Correspondingly, the determination data preprocessing unit 140 executes the linear interpolation processing on the determination data.

The lower part of this diagram illustrates the time series data after the execution of the linear interpolation processing as the preprocessing. As illustrated in the lower part of this diagram, in the time series data of each sensor, the places where data lose occurred are interpolated by the data on a straight line that connects the data just before and after the occurrence of the data loss. In more details, the vibrational data (Sensor1_Acc) of sensor 1 at date and time: 2018/05/01 00:01 and 00:02 are respectively interpolated from "NULL" by "1.1" and "1.2", which are the data on a straight line connecting the vibrational data "1" of sensor 1 at 2018/05/01 00:00 and the vibrational data "2" of sensor 1 at 2018/05/01 00:10. Similarly, the acceleration data (Sensor 3_Vel) of sensor 3 at date and time: 2018/05/01 00:10 and 00:11 are respectively interpolated from "NULL" by "52.1" and "52.2", which are the data on a straight line connecting the acceleration data "52" of sensor 3 at 2018/05/01 00:02 and the acceleration data "53" of sensor 3 at 2018/05/01 00:12. In this manner, the determination data preprocessing unit 140 may execute the interpolation processing on the determination data. On this occasion, the interpolation processing may be the linear interpolation processing. Thereby, the determination apparatus 100 can execute the state determination processing of the measurement target in all timings after the date and time: 2018/05/01 00:02.

Fig. 7 illustrates one example of the time series data before and after the waveform compression processing. In this diagram, the vertical axis illustrates the time series, and the horizontal axis illustrates the types of each time series data (in this diagram, vibrational data of sensor 1, and acceleration data of sensor 1). The upper part of this diagram illustrates the time series data of each sensor before the execution of preprocessing.

As shown in the upper part of this diagram, the vibrational data and acceleration data of sensor 1 are the sensor data of 1 second (fast) sampling. When a state determination processing of the measurement target is executed at every sampling rate (every 1 second) on such sensor data of fast sampling, it may take a long time to make a determination, and conversely, the output of determination result may be delayed.

On the other hand, in the present embodiment, in the learning apparatus 300, the preprocessing determination unit 320 decides to execute the waveform (Peak To Peak) compression processing as a preprocessing algorithm to preprocess the learning data in which such sensor data of fast sampling are included. Correspondingly, the learning data preprocessing unit 330 executes the waveform compression processing on the learning data. Then, in the determination apparatus 100, in this case where the state determination of the measurement target is performed by the learning model 350, learned by using the learning data where the waveform compression interpolation processing was executed, the preprocessing information acquisition unit 120 will acquire the information that specifies the execution of the waveform compression interpolation processing as the preprocessing algorithm. Correspondingly, the determination data preprocessing unit 140 executes the waveform compression interpolation processing on the determination data.

The lower part of this diagram illustrates the time series data after the execution of the waveform compression interpolation processing as the preprocessing. As illustrated in the lower part of this diagram, the time series data of each sensor are converted from the data with intervals of one second to the data with intervals of one minute. In this case, the determination data preprocessing unit 140 and the learning data preprocessing unit 330 convert the data acquired by the first interval to the data of the second interval that is longer than the first interval. On this occasion, the determination data preprocessing unit 140 and the learning data preprocessing unit 330, for example, during the period determined by the second interval, convert the data acquired with intervals of one second (the first interval), using the the smallest value and the largest value thereof, into the data with intervals of one minute (the second interval). In more details, the determination data preprocessing unit 140 and the learning data preprocessing unit 330 convert each of the vibrational data and the acceleration data of sensor 1 in such a way: among the data of time and date: 2018/05/01 0:00:0-2018/05/01 0:00:59, converting the smallest value to the data of time and date: 2018/05/01 0:00:0 Min, and the largest value to the data of time and date: 2018/05/01 0:00:0 Max. Similarly, among the data of time and date: 2018/05/01 0:01:0-2018/05/01 0:01:59, the determination data preprocessing unit 140 and the learning data preprocessing unit 330 convert the smallest value to the data of time and date: 2018/05/01 0:01:0 Min, and the largest value to the data of time and date: 2018/05/01 0:01:0 Max. In this manner, the determination data preprocessing unit 140 may execute the waveform compression processing on the determination data. Thereby, the determination apparatus 100 can execute the state determination processing of the measurement target by intervals of one minute at the date and time: 2018/05/01 00:00, 2018/05/01 00:01.

Additionally, in such a situation, the determination apparatus 100 may also alter the timing of acquiring the determination data. For example, the determination apparatus 100 may also optimize the timing for acquiring the determination data according to the specified preprocessing algorithm. For example, when specifying waveform compressing the data acquired by the first interval into the data of the second interval that is longer than the first interval as the preprocessing algorithm, the determination apparatus 100 may also alter the timing for acquiring the determination data from the first interval to the third interval, which is longer than the first interval and shorter than the second interval. That is, the determination apparatus 100 may also alter the timing for acquiring the determination data, so that the determination data acquired by intervals of one second will be acquired by the interval that is longer than 1 second and shorter than 1 minute. Thereby, the determination data for acquired by the determination apparatus 100 can be reduced, and the determination processing can be more efficient.

Up to this point, the cases of executing the previous value interpolation processing, linear interpolation processing and waveform compression processing are described as one example of the preprocessing algorithm. But just as mentioned above, various processings may be executed as the preprocessing algorithm. In this manner, in the present embodiment, the learning apparatus 300 determines the optimal preprocessing algorithm for preprocessing the learning data, and executes the preprocessing on the learning data. Then, when the determination apparatus 100 performs the state determination of the measurement target by the learning model 350 learned by using the learning data preprocessed in this manner, acquires the information that specifies the preprocessing algorithm, and executes the preprocessing on the determination data, by the preprocessing algorithm used for learning the learning model 350. Accordingly, with the present embodiment, the preprocessing executed on the learning data when the learning apparatus 300 learns the learning model 350 can correspond to the preprocessing performed on the determination data when the determination apparatus 100 determines the state of the measurement target using the learning model 350, and the accuracy of the state determination of the measurement target can be improved.

Also, for example, the measurement data could be preprocessed (for example, interpolation processing) before being stored in measurement data DB in the cloud, but this would increase the volume of data stored in measurement data DB, which could lead to increased resources and costs in the cloud. On the other hand, with the determination apparatus 100 and the learning apparatus 300 of the present embodiment, as each preprocessing is executed after acquiring the measurement data from measurement data DB, so the volume of data stored by measurement data DB can be suppressed.

Also, for example, when the interpolation processing is executed as the preprocessing algorithm, the determination apparatus 100 and the learning apparatus 300 of the present embodiment can interpolate the data loss even if the data loss occurs in the time series data. Thereby, with the determination apparatus 100, as the state determination processing of the measurement target can be executed without waiting for all the data being available, so the delays of the output of the determination result can be suppressed.

In particular, when previous value interpolation processing is set as the interpolation processing, as the determination apparatus 100 and the learning apparatus 300 interpolate the data lose with the immediately previous data, without performing unnecessary calculations when there is a data loss in the time series data, so the burden on preprocessing can be reduced and processing can be accelerated.

In particular, when linear interpolation processing is set as the interpolation processing, the determination apparatus 100 and the learning apparatus 300 can interpolate the data loss with the data closer to the data that should be acquired when there is a data loss in the time series data. Thereby, the determination apparatus 100 can further improve the accuracy of the state determination of the measurement target.

Also, for example, when waveform compression processing is executed as the preprocessing algorithm, as the determination apparatus 100 of the present embodiment converts the determination data to the second interval (intervals of one minute) which is longer than the first interval (intervals of one second), and executes the state determination processing of the measurement target by the second interval, so the acceleration of determination can be realized without losing the accuracy of determination. Also, as the learning apparatus 300 of the present embodiment converts the learning data to the second interval (intervals of one minute) which is longer than the first interval (intervals of one second) , and learns the learning model 350 using the learning data with the second interval, so the burden of learning can be reduced, and the processings of learning can be accelerated.

Also, the determination apparatus 100 and the learning apparatus 300 are configured as separate apparatuses. Generally, there is a huge burden for learning the learning model. As the determination apparatus 100 is separated from the learning apparatus 300 and configured as a separate entity, so the determination apparatus 100 can be made smaller and lower in capacity.

Fig. 8 illustrates one example of a block diagram of the determination apparatus 100 in a variant of the present embodiment. In this diagram, members having the same functions and configuration as in Fig. 1 are given the same reference numerals, and the description is omitted hereafter except for the following differences. The determination apparatus 100 of this variant further includes an error notification unit 810.

In this variant, the determination data acquisition unit 130 supplies the acquired determination data to the error notification unit 810 in addition to the determination data preprocessing unit 140. Then, the error notification unit 810 notifies the error when the period for which data cannot be acquired exceeds a predetermined period in the time series data acquired from the determination data acquisition unit 130. On this occasion, the error notification unit 810 may notify the error, when the consecutive period for which data cannot be acquired exceeds a predetermined period. Alternatively, or additionally, the error notification unit 810 may also notify the error when the total period for which data cannot be acquired within a predetermined period exceeds the predetermined period.

Fig. 9 illustrates one example of the time series data when the period for which data cannot be acquired exceeds a predetermined period. In this diagram, the vertical axis illustrates the time series, and the horizontal axis illustrates the types of each time series data. As shown in this diagram, it could be known that in the time series data, during date and time: 2018/05/01 00:11∼date and time: 2018/05/01 00:32, the vibrational data, acceleration data and temperature data of sensor 1 show NULL, and the measurement data from sensor 1 in this period cannot be acquired. Such a state may occur, when the measurement data of sensor 1 is not stored by measurement data DB, for example, due to troubles and so on of sensor 1 or peripheral devices.

Even if the determination apparatus 100 executes preprocessing (for example, interpolation processing) in such a state, the interpolated data may deviate significantly from the data that should be acquired, and even if the state of the measurement target is determined based on the preprocessed data in this way, it cannot be said that an accurate determination result is output. Therefore, the determination apparatus 100 of this variant notifies the error without executing the state determination processing of the measurement target in such a case.

Fig. 10 illustrates one example of a flow for notifying the error by the determination apparatus 100 in a variant of the present embodiment.

In step 1010, the determination apparatus 100 acquires the sampling rate of the device. For example, the error notification unit 810 acquires the sampling rate of the field devices measuring the measurement target (for example, a sensor), based on the determination data supplied by the determination data acquisition unit 130.

In step 1020, the determination apparatus 100 counts the NULL value. For example, the error notification unit 810 counts the period of NULL value in the time series data, according to the sampling rate acquired in step 1010. Additionally, the period, as mentioned above, may be a consecutive period, or may also be the sum of discrete periods within a given period.

In step 1030, the determination apparatus 100 determines whether NULL value has occurred for a predetermined period. For example, the error notification unit 810 determines whether the value counted in step 1020 exceeds the predetermined threshold value.

When NULL value is determined not to occur for the predetermined period, that is, in step 1020 the counted value does not exceed the predetermined threshold value, the determination apparatus 100 will preprocess the determination data in step 1040 normally.

On the other hand, when NULL value is determined to occur for the predetermined period, that is, in step 1020 the counted value exceeds the predetermined threshold value, the error notification unit 810 will notify the error in step 1050. On this occasion, the error notification unit 810 may also notify the determination data preprocessing unit 140 of the error, to control the determination data preprocessing unit 140 not to preprocess the determination data. Thereby, the determination apparatus 100 can suppress the unnecessary preprocessing. Alternatively, or additionally, the error notification unit 810 may also notify other apparatuses of the error. Thereby, the determination apparatus 100 can notify the user that an error has occurred.

In this manner, the determination apparatus 100 of this variant notifies the error when the period for which data cannot be acquired exceeds a predetermined period in the time series data. Thereby, with the determination apparatus of this variant, for example, mis-determination of the state of the measurement target, caused by troubles with sensors and peripheral devices, can be prevented in advance.

Fig. 11 illustrates one example of a block diagram of the determination apparatus 100 of another variant not falling under the invention. This diagram, members having the same functions and configuration as in Fig. 1 and Fig. 3 are given the same reference numerals, and the description is omitted hereafter except for the following differences. In the above-mentioned description, the case where the determination apparatus 100 is configured as a separate apparatuses to the learning apparatus 300 is described as one example. However, the determination apparatus 100 of this other variant has the functions of the determination apparatus 100 shown in Fig. 1 and the functions of the learning apparatus 300 shown in Fig. 3 in one piece. That is, the determination apparatus 100 of this other variant further include the learning data acquisition unit 310 for acquiring the learning data, which are the time series data obtained by measuring a measurement target, and the preprocessing determination unit 320 for determining a preprocessing algorithm to preprocess the learning data, and the learning data preprocessing unit 330 for preprocessing the learning data by the preprocessing algorithm, and the learning unit 340 for learning the learning model using the preprocessed learning data, and the preprocessing information output unit 360 for outputting the information that specifies the preprocessing algorithm in association with the learning model.

In this case, the preprocessing information acquisition unit 120 may acquire the information that specifies the preprocessing algorithm from the preprocessing information output unit 360. Also, the preprocessing information acquisition unit 120 may supply the information that specifies the acquired preprocessing algorithm from the preprocessing information output unit 360, to the determination data preprocessing unit 140. Then, the determination data preprocessing unit 140 specifies the preprocessing algorithm based on the information that specifies the preprocessing algorithm supplied by the preprocessing information acquisition unit 120, that is, the information that specifies the acquired preprocessing algorithm from the preprocessing information output unit 360, and preprocesses the determination data by the preprocessing algorithm when determining the state of the measurement target using the corresponding learning model. In this manner, with the determination apparatus 100, as the acquisition of the preprocessing information is performed within the same apparatus, the effort and time spent on acquiring preprocessing information can be reduced, and the risk of leakage of preprocessing information to the outside can also be reduced.

The determination apparatus 100 of this other variant may also further include a learning model 350. In this case, the learning model acquisition unit 110 may acquire the learning model 350 learned by the learning unit 340. In this manner, with the determination apparatus 100, as the acquisition of the model is performed within the same apparatus, the effort and time spent on acquiring the model can be reduced, and the risk of leakage of the model to the outside can also be reduced. Also, with the determination apparatus 100 of this other variant, the processings from the model learning to the state determination of the measurement target, can be realized by one apparatus all-in-one, so the management and maintenance of the apparatus can be simplified.

Various embodiments of the present invention may be described with reference to flowcharts and block diagrams. The block here may describe (1) the stage in the process where the operations are executed, or (2) the section of the apparatus responsible for executing the operations. Particular stages and sections may be implemented by dedicated circuit, programmable circuit supplied together with computer-readable instruction stored in computer-readable medium, and/or processor supplied together with computer-readable instruction stored in computer-readable medium. Dedicated circuit may include digital and/or analog hardware circuit, may include integrated circuit (IC) and/or discrete circuit. Programmable circuits may include reconfigurable hardware circuits including Logical AND, Logical OR, Logical XOR, Logical NAND, Logical NOR, and other logic operations, and memory elements such as flip-flops, registers, field programmable gate arrays (FPGAs), and programmable logic arrays (PLAs), etc.

A computer readable medium may include any tangible device capable of storing instructions to be executed by an appropriate device. As a result, the computer readable medium having instructions stored therein will have a product that includes instructions that may be executed to create the means for performing operations specified in the flowchart or block diagram. Examples of the computer readable medium may include an electronic storage medium, a magnetic storage medium, an optical storage medium, an electromagnetic storage medium, a semiconductor storage medium and the like. More specific examples of the computer readable medium may include a floppy (registered trademark) disk, a diskette, a hard disk, a random access memory (RAM), a read-only memory (ROM), an erasable programmable read-only memory (EPROM or flash memory), an electrically erasable programmable read-only memory (EPROM), a static random access memory (SRAM), a compact disc read-only memory (CD-ROM), a digital versatile disk (DVD), a blue-ray (registered trademark) disk, a memory stick, an integrated circuit card and so on.

Computer readable instructions may include assembler instructions, instruction set architecture (ISA) instructions, machine instructions, machine-dependent instructions, microcodes, firmware instructions, state-setting data, or object-oriented programming languages such as Smalltalk (registered trademark), Java (registered trademark), C++ and so on, and either source code or object code written in any combination of one or more programming languages including traditional procedural programming languages such as the "C" programming language or similar programming language.

Computer readable instructions may be provided to a processor or programmable circuit of a general purpose computer, a special purpose computer, or other programmable data processing device locally or via a local area network (LAN), a wide area network (WAN) such as the Internet, and the computer readable instructions may be executed to create the means for performing operations specified in the flow chart or block diagram. Examples of processors include computer processors, processing units, microprocessors, digital signal processors, controllers, microcontrollers, and so on.

Fig. 12 illustrates an example of the computer 2200 in which a plurality of aspects of the present invention may be embodied entirely or partially. A program installed in the computer 2200 can cause the computer 2200 to function as operations associated with apparatuses according to embodiments of the present invention or one or more sections of the apparatuses, or perform the operations or the one or more sections and/or cause the computer 2200 to perform processes or stages of said processes associated with embodiments of the present invention. Such a program may be executed by a CPU 2212 to cause the computer 2200 to perform specific operations associated with some or all of the blocks of the flowcharts and block diagrams described in this specification.

The computer 2200 of this embodiment includes the CPU 2212, a RAM 2214, a graphics controller 2216, and a display device 2218. They are mutually connected by a host controller 2210. The computer 2200 also includes input/output unit such as a communication interface 2222, a hard disk drive 2224, a DVD-ROM drive 2226 and a IC card drive. They are connected to a host controller 2210 via a input/output controller 2220. Computer also includes a legacy input/output unit such as a ROM 2230 and a keyboards 2242. They are connected to a input/output controller 2220 via a input/output chip 2240.

The CPU 2212 operates in accordance with programs stored in the ROM 2230 and the RAM 2214, thereby controlling each unit. The graphics controller 2216 acquires the image data generated by the CPU 2212 in a frame buffer or the like provided in the RAM 2214 or in itself, so that the image data is displayed on the display device 2218.

The communication interface 2222 communicates with other electronic devices via network. The hard disk drive 2224 stores the program and data used by the CPU 2212 in the computer 2200. The DVD-ROM drive 2226 reads program or data from the DVD-ROM 2201, and provides the program or data to the hard disk drive 2224 via the RAM 2214. An IC card drive reads program and data from an IC card, and/or write the program and data into the IC card.

The ROM 2230 stores boot programs and so on, and/or programs dependent on the hardware of the computer 2200 that are executed by the computer 2200 at the time of activation within it. The input/output chip 2240 may also connect various input/output units to the input/output controller 2220 via a parallel port, serial port, keyboard port, mouse port and so on.

The program is provided by a computer-readable medium such as the DVD-ROM 2201 or and the IC card. The program is read from a computer-readable medium and installed in the hard disk drive 2224, the RAM 2214, or the ROM 2230, which is also an example of computer-readable medium, and is executed by the CPU 2212. The information processing described within these programs is read by the computer 2200 and results in a linkage between the programs and the various types of hardware resources described above. Apparatus or method may be configured with realizing the operations or processing of information in accordance with the use of the computer 2200.

For example, when the communication is executed between the computer 2200 and an external device, the CPU 2212 may execute a communication program loaded in the RAM 2214 and instruct the command communication interface 2222 to perform the communication process based on the process described in the communication program. The communication interface 2212 reads the transmission data stored in a transmission buffer processing region provided in a recording medium such as the RAM 2214, the hard disk drive 2224, the DVD-ROM 2201, or IC card, under the control of the CPU 2222, and transmits the read transmission data to the network, or writes the received data received from the network into a reception buffer processing region provided on the recording medium.

Also, the CPU 2212 may allow all or a necessary portion of a file or database stored on an external recording medium such as the hard disk drive 2224, the DVD-ROM drive 2226 (DVD-ROM 2201), the IC card to be read into the RAM 2214 and execute various types of process on the data on the RAM 2214. The CPU 2212 then writes back the processed data to an external recording medium.

Various types of information, such as various types of programs, data, tables, and databases, may be stored on a recording medium to receive information processing. The CPU 2212 may execute various types of processes, including various types of operations, information processing, conditional judgments, conditional branching, unconditional branching, information retrieval/replacement and so on as described throughout the present disclosure and designated by the sequence of instructions of the program, on the data read from the RAM 2214, and write back the results to the RAM 2214. Also, the CPU 2212 may search for information in files, databases and so on in the recording medium. For example, when a plurality of entries having an attribute value of the first attribute, each associated with an attribute value of the second attribute, are stored in the recording medium, the CPU 2212 may search among the plurality of entries for an entry matching the conditions, in which the attribute value of the first attribute is designated, and read the attribute value of the second attribute stored in the entry, thereby acquiring the attribute value of the second attribute associated with the first attribute that meets the predetermined conditions.

The programs or software modules described above may be stored on a computer-readable medium on or near the computer 2200. Also, a recording medium such as a hard disk or RAM provided within a server system connected to a dedicated communication network or the Internet can be used as a computer-readable medium, thereby providing the program to the computer 2200 via the network.

While the embodiments of the present invention have been described, the technical scope of the invention is not limited to the above described embodiments. It is apparent to persons skilled in the art that various alterations and improvements can be added to the above-described embodiments. It is also apparent from the scope of the claims that the embodiments added with such alterations or improvements can be included in the technical scope of the invention.

It should be noted that the operations, procedures, steps, and stages of each process performed by an apparatus, system, program, and method shown in the claims, embodiments, or diagrams can be performed in any order as long as the order is not indicated by "prior to," "before," or the like and as long as the output from a previous process is not used in a later process. Even if the process flow is described using phrases such as "first" or "next" in the claims, embodiments, or diagrams, it does not necessarily mean that the process must be performed in this order.

### EXPLANATION OF REFERENCES

100: determination apparatus, 110: learning model acquisition unit, 120: preprocessing information acquisition unit, 130: determination data acquisition unit, 140: determination data preprocessing unit, 150: determination unit, 160: determination result output unit, 300: learning apparatus, 310: learning data acquisition unit, 320: preprocessing determination unit, 330: learning data preprocessing unit, 340: learning unit, 350: learning model model, 360: preprocessing information output unit, 810: error notification unit, 2200: computer, 2201: DVD-ROM, 2210: host controller, 2212: CPU, 2214: RAM, 2216: graphics controller, 2218: display device, 2220: input/output controller, 2222: communication interface, 2224: hard disk drive, 2226: DVD-ROM drive, 2230: ROM, 2240: input/output chip, 2242: keyboard

## Claims

1. A determination apparatus (100) comprising:
a determination data acquisition unit (130) for acquiring, from a field device installed in a plant, determination data, which are time series data obtained by measuring a measurement target;
a preprocessing information acquisition unit (120) for acquiring information that specifies a preprocessing algorithm from a plurality of preprocessing information items that are stored in association with each of a plurality of learning models, the preprocessing algorithm used for learning a learning model of the plurality of learning models that receives the determination data, which are the time series data obtained by measuring the measurement target, and outputs a state of the measurement target the learning model being learned by using learning data, the learning data being the time series data obtained by measuring the measurement target;
a determination data preprocessing unit (140) for preprocessing the determination data by the preprocessing algorithm specified based on the information; and
a determination unit (150) for determining the state of the measurement target, based on the preprocessed determination data, using the learning model, wherein the state of the measurement target is an abnormality or degradation of the measurement target.

2. The determination apparatus (100) according to claim 1, wherein the determination data preprocessing unit (140) executes an interpolation processing on the determination data.

3. The determination apparatus (100) according to claim 2, wherein the interpolation processing is a previous value interpolation processing.

4. The determination apparatus (100) according to claim 2, wherein the interpolation processing is a linear interpolation processing.

5. The determination apparatus (100) according to claim 1, wherein the determination data preprocessing unit (140) executes a waveform compression processing on the determination data, wherein the waveform compression processing converts the determination data sampled with a first interval to data sampled with a second interval that is longer than the first interval.

6. The determination apparatus (100) according to any one of claims 1 to 5, further comprising:
a learning data acquisition unit (310) for acquiring the learning data, which are time series data measured on the measurement target;
a preprocessing determination unit (320) for determining the preprocessing algorithm to preprocess the learning data;
a learning data preprocessing unit (330) for preprocessing the learning data by the preprocessing algorithm;
a learning unit (340) for learning the learning model, using the preprocessed learning data; and
a preprocessing information output unit (360) for outputting information that specifies the preprocessing algorithm corresponding to the learning model.

7. The determination apparatus (100) according to claim 6, further comprising the learning model.

8. A determination method, comprising:
acquiring, from a field device installed in a plant, determination data, which are time series data obtained by measuring a measurement target;
acquiring information that specifies a preprocessing algorithm from a plurality of preprocessing information items that are stored in association with each of a plurality of learning models, the preprocessing algorithm used for learning a learning model of the plurality of learning models that receives the determination data, which are the time series data obtained by measuring the measurement target, and outputs a state of the measurement target, the learning model being learned by using learning data, the learning data being the time series data obtained by measuring the measurement target;
preprocessing the determination data by the preprocessing algorithm specified based on the information; and
determining the state of the measurement target based on the preprocessed determination data using the learning model, wherein the state of the measurement target is an abnormality or degradation of the measurement target.

9. A determination program that, when executed by a computer, causes the computer to carry out the method of claim 8.

10. A system comprising:
the determination apparatus (100) according to claim 1; and
a learning apparatus (300), comprising:
a learning data acquisition unit (310) for acquiring learning data, which are time series data obtained by measuring measurement target by a field device installed in a plant;
a preprocessing determination unit (320) for determining a preprocessing algorithm to preprocess the learning data;
a learning data preprocessing unit (330) for preprocessing the learning data by the preprocessing algorithm;
a learning unit (340) for learning the learning model, using the preprocessed learning data; and
a preprocessing information output unit (360) for outputting information that specifies the preprocessing algorithm in association with the learning model.

11. A method comprising:
the determination method according to claim 8; and
a learning method, comprising:
acquiring learning data, which are time series data obtained by measuring a measurement target by a field device installed in a plant;
determining a preprocessing algorithm to preprocess the learning data;
preprocessing the learning data by the preprocessing algorithm;
learning the learning model using the preprocessed learning data; and
outputting information that specifies the preprocessing algorithm in association with the learning model.

12. A program that, when executed by a computer, causes the computer to carry out the method of claim 11.

13. A computer readable recording medium storing the program according to claim 9 or 12.

## Patentansprüche

1. Bestimmungsvorrichtung (100), umfassend:
eine Bestimmungsdatenerfassungseinheit (130) zum Erfassen von Bestimmungsdaten von einer in einer Anlage installierten Feldvorrichtung, bei denen es sich um Zeitreihendaten handelt, die durch Messen eines Messziels erhalten werden;
eine Vorverarbeitungsinformationserfassungseinheit (120) zum Erfassen von Informationen, die einen Vorverarbeitungsalgorithmus aus einer Vielzahl von Vorverarbeitungsinformationselementen spezifizieren, die in Verbindung mit jedem einer Vielzahl von Lernmodellen gespeichert sind, wobei der Vorverarbeitungsalgorithmus zum Lernen eines Lernmodells der Vielzahl von Lernmodellen verwendet wird, das die Bestimmungsdaten empfängt, welche die Zeitreihendaten sind, die durch Messen des Messziels erhalten werden, und einen Zustand des Messziels ausgibt, wobei das Lernmodell durch Verwendung von Lerndaten gelernt wird, wobei die Lerndaten die Zeitreihendaten sind, die durch Messen des Messziels erhalten werden;
eine Bestimmungsdatenvorverarbeitungseinheit (140) zum Vorverarbeiten der Bestimmungsdaten durch den Vorverarbeitungsalgorithmus, der auf der Grundlage der Informationen spezifiziert ist; und eine Bestimmungseinheit (150) zum Bestimmen des Zustands des Messziels auf der Grundlage der vorverarbeiteten Bestimmungsdaten unter Verwendung des Lernmodells, wobei der Zustand des Messziels eine Abnormalität oder Verschlechterung des Messziels ist.

2. Bestimmungsvorrichtung (100) nach Anspruch 1, wobei die Bestimmungsdatenvorverarbeitungseinheit (140) eine Interpolationsverarbeitung an den Bestimmungsdaten durchführt.

3. Bestimmungsvorrichtung (100) nach Anspruch 2, wobei die Interpolationsverarbeitung eine Vorwert-Interpolationsverarbeitung ist.

4. Bestimmungsvorrichtung (100) nach Anspruch 2, wobei die Interpolationsverarbeitung eine lineare Interpolationsverarbeitung ist.

5. Bestimmungsvorrichtung (100) nach Anspruch 1, wobei die Bestimmungsdatenvorverarbeitungseinheit (140) eine Wellenform-Kompressionsverarbeitung an den Bestimmungsdaten ausführt, wobei die Wellenform-Kompressionsverarbeitung die mit einem ersten Intervall abgetasteten Bestimmungsdaten in Daten umwandelt, die mit einem zweiten Intervall abgetastet werden, das länger als das erste Intervall ist.

6. Bestimmungsvorrichtung (100) einem der Ansprüche 1 bis 5, des Weiteren umfassend:
eine Lerndatenerfassungseinheit (310) zum Erfassen der Lerndaten, bei denen es sich um am Messobjekt gemessene Zeitreihendaten handelt;
eine Vorverarbeitungsbestimmungseinheit (320) zum Bestimmen des Vorverarbeitungsalgorithmus zum Vorverarbeiten der Lerndaten;
eine Lerndatenvorverarbeitungseinheit (330) zum Vorverarbeiten der Lerndaten durch den Vorverarbeitungsalgorithmus;
eine Lerneinheit (340) zum Lernen des Lernmodells unter Verwendung der vorverarbeiteten Lerndaten; und
eine Vorverarbeitungsinformationsausgabeeinheit (360) zum Ausgeben von Informationen, die Vorverarbeitungsalgorithmus spezifizieren, der dem Lernmodell entspricht.

7. Bestimmungsvorrichtung (100) nach Anspruch 6, des Weiteren umfassend das Lernmodell.

8. Bestimmungsverfahren, umfassend:
Erfassen von Bestimmungsdaten von einer in einer Anlage installierten Feldvorrichtung, bei denen es sich um Zeitreihendaten handelt, die durch Messen eines Messziels erhalten werden;
Erfassen von Informationen, die einen Vorverarbeitungsalgorithmus aus einer Vielzahl von Vorverarbeitungsinformationselementen spezifizieren, die in Verbindung mit jedem einer Vielzahl von Lernmodellen gespeichert sind, wobei der Vorverarbeitungsalgorithmus zum Lernen eines Lernmodells der Vielzahl von Lernmodellen verwendet wird, das die Bestimmungsdaten empfängt, welche die Zeitreihendaten sind, die durch Messen des Messziels erhalten werden, und einen Zustand des Messziels ausgibt, wobei das Lernmodell durch Verwendung von Lerndaten gelernt wird, wobei die Lerndaten die Zeitreihendaten sind, die durch Messen des Messziels erhalten werden;
Vorverarbeiten der Bestimmungsdaten durch den auf der Grundlage der Informationen spezifizierten Vorverarbeitungsalgorithmus; und
Bestimmen des Zustands des Messziels auf der Grundlage der vorverarbeiteten Bestimmungsdaten unter Verwendung des Lernmodells, wobei der Zustand des Messziels eine Abnormalität oder Verschlechterung des Messziels ist.

9. Bestimmungsprogramm, das, wenn es von einem Computer ausgeführt wird, den Computer veranlasst, das Verfahren nach Anspruch 8 auszuführen.

10. System, umfassend:
die Bestimmungsvorrichtung (100) nach Anspruch 1; und
eine Lernvorrichtung (300), umfassend:
eine Lerndatenerfassungseinheit (310) zum Erfassen von Lerndaten, bei denen es sich um Zeitreihendaten handelt, die durch Messen eines Messziels durch eine in einer Anlage installierte Feldvorrichtung erhalten werden;
eine Vorverarbeitungsbestimmungseinheit (320) zum Bestimmen eines Vorverarbeitungsalgorithmus zum Vorverarbeiten der Lerndaten;
eine Lerndatenvorverarbeitungseinheit (330) zum Vorverarbeiten der Lerndaten durch den Vorverarbeitungsalgorithmus;
eine Lerneinheit (340) zum Lernen des Lernmodells unter Verwendung der vorverarbeiteten Lerndaten; und
eine Vorverarbeitungsinformationsausgabeeinheit (360) zum Ausgeben von Informationen, die den Vorverarbeitungsalgorithmus im Zusammenhang mit dem Lernmodell spezifizieren.

11. Verfahren, das umfasst:
das Bestimmungsverfahren nach Anspruch 8; und
ein Lernverfahren, umfassend:
Erfassen von Lerndaten, bei denen es sich um Zeitreihendaten handelt, die durch Messen eines Messziels durch eine in einer Anlage installierte Feldvorrichtung erhalten werden;
Bestimmen eines Vorverarbeitungsalgorithmus zur Vorverarbeitung der Lerndaten;
Vorverarbeiten der Lerndaten durch den Vorverarbeitungsalgorithmus;
Lernen des Lernmodells unter Verwendung der vorverarbeiteten Lerndaten; und
Ausgeben von Informationen, die den Vorverarbeitungsalgorithmus im Zusammenhang mit dem Lernmodell spezifizieren.

12. Programm, das, wenn es von einem Computer ausgeführt wird, den Computer veranlasst, das Verfahren nach Anspruch 11 auszuführen.

13. Computerlesbares Aufzeichnungsmedium, das das Programm nach Anspruch 9 oder 12 speichert.

## Revendications

1. Appareil de détermination (100) comprenant :
une unité d'acquisition de données de détermination (130) pour acquérir, auprès d'un dispositif de terrain installé dans une installation, des données de détermination, qui sont des données de série temporelle obtenues en mesurant une cible de mesure ;
une unité d'acquisition d'information de prétraitement (120) pour acquérir de l'information qui spécifie un algorithme de prétraitement à partir d'une pluralité d'éléments d'information de prétraitement qui sont stockés en association avec chaque modèle d'une pluralité de modèles d'apprentissage, l'algorithme de prétraitement étant utilisé pour apprendre un modèle d'apprentissage de la pluralité de modèles d'apprentissage qui reçoit les données de détermination, qui sont les données de série temporelle obtenues en mesurant la cible de mesure, et sort un état de la cible de mesure, le modèle d'apprentissage étant appris à l'aide de données d'apprentissage, les données d'apprentissage étant les données de série temporelle obtenues en mesurant la cible de mesure ;
une unité de prétraitement de données de détermination (140) pour prétraiter les données de détermination à l'aide de l'algorithme de prétraitement spécifié sur la base de l'information ; et
une unité de détermination (150) pour déterminer l'état de la cible de mesure, sur la base des données de détermination prétraitées, à l'aide du modèle d'apprentissage, dans lequel l'état de la cible de mesure est une anomalie ou une dégradation de la cible de mesure.

2. Appareil de détermination (100) selon la revendication 1, dans lequel l'unité de prétraitement de données de détermination (140) exécute un traitement d'interpolation sur les données de détermination.

3. Appareil de détermination (100) selon la revendication 2, dans lequel le traitement d'interpolation est un traitement d'interpolation d'une valeur précédente.

4. Appareil de détermination (100) selon la revendication 2, dans lequel le traitement d'interpolation est un traitement d'interpolation linéaire.

5. Appareil de détermination (100) selon la revendication 1, dans lequel l'unité de prétraitement de données de détermination (140) exécute un traitement de compression de forme d'onde sur les données de détermination, dans lequel le traitement de compression de forme d'onde convertit les données de détermination échantillonnées avec un premier intervalle en données échantillonnées avec un deuxième intervalle supérieur au premier intervalle.

6. Appareil de détermination (100) selon l'une quelconque des revendications 1 à 5, comprenant en outre :
une unité d'acquisition de données d'apprentissage (310) pour acquérir les données d'apprentissage, qui sont des données de série temporelle mesurées sur la cible de mesure ;
une unité de détermination de prétraitement (320) pour déterminer l'algorithme de prétraitement afin de prétraiter les données d'apprentissage ;
une unité de prétraitement de données d'apprentissage (330) pour prétraiter les données d'apprentissage à l'aide de l'algorithme de prétraitement ;
une unité d'apprentissage (340) pour apprendre le modèle d'apprentissage à l'aide des données d'apprentissage prétraitées ; et
une unité de sortie d'information de prétraitement (360) pour sortir de l'information qui spécifie l'algorithme de prétraitement correspondant au modèle d'apprentissage.

7. Appareil de détermination (100) selon la revendication 6, comprenant en outre le modèle d'apprentissage.

8. Procédé de détermination, comprenant :
l'acquisition, à partir d'un dispositif de terrain installé dans une installation, de données de détermination, qui sont des données de série temporelle obtenues en mesurant une cible de mesure ;
l'acquisition d'information qui spécifie un algorithme de prétraitement à partir d'une pluralité d'éléments d'information de prétraitement qui sont stockés en association avec chaque modèle d'une pluralité de modèles d'apprentissage, l'algorithme de prétraitement étant utilisé pour apprendre un modèle d'apprentissage de la pluralité de modèles d'apprentissage qui reçoit les données de détermination, qui sont les données de série temporelle obtenues en mesurant la cible de mesure, et sort un état de la cible de mesure, le modèle d'apprentissage étant appris à l'aide de données d'apprentissage, les données d'apprentissage étant les données de série temporelle obtenues en mesurant la cible de mesure ;
le prétraitement des données de détermination par l'algorithme de prétraitement spécifié sur la base de l'information ; et
la détermination de l'état de la cible de mesure sur la base des données de détermination prétraitées en utilisant le modèle d'apprentissage, dans lequel l'état de la cible de mesure est une anomalie ou une dégradation de la cible de mesure.

9. Programme de détermination qui, lorsqu'il est exécuté par un ordinateur, commande à l'ordinateur d'exécuter le procédé selon la revendication 8.

10. Système comprenant :
l'appareil de détermination (100) selon la revendication 1 ; et
un appareil d'apprentissage (300), comprenant :
une unité d'acquisition de données d'apprentissage (310) pour acquérir des données d'apprentissage, qui sont des données de série temporelle obtenues en mesurant une cible de mesure à l'aide d'un dispositif de terrain installé dans une installation ;
une unité de détermination de prétraitement (320) pour déterminer un algorithme de prétraitement destiné à prétraiter les données d'apprentissage ;
une unité de prétraitement de données d'apprentissage (330) pour prétraiter les données d'apprentissage à l'aide de l'algorithme de prétraitement ;
une unité d'apprentissage (340) pour apprendre le modèle d'apprentissage à l'aide des données d'apprentissage prétraitées ; et
une unité de sortie d'information de prétraitement (360) pour sortir de l'information qui spécifie l'algorithme de prétraitement en association avec le modèle d'apprentissage.

11. Procédé comprenant :
le procédé de détermination selon la revendication 8 ; et
un procédé d'apprentissage, comprenant :
l'acquisition de données d'apprentissage, qui sont des données de série temporelle obtenues en mesurant une cible de mesure à l'aide d'un dispositif de terrain installé dans une installation ;
la détermination d'un algorithme de prétraitement pour prétraiter les données d'apprentissage ;
le prétraitement des données d'apprentissage à l'aide de l'algorithme de prétraitement ;
l'apprentissage du modèle d'apprentissage à l'aide des données d'apprentissage prétraitées ; et
la sortie d'information qui spécifie l'algorithme de prétraitement en association avec le modèle d'apprentissage.

12. Programme qui, lorsqu'il est exécuté par un ordinateur, commande à l'ordinateur d'exécuter le procédé selon la revendication 11.

13. Support d'enregistrement lisible par un ordinateur, sur lequel est stocké le programme selon la revendication 9 ou 12.
